(19) Europäisches Patentamt

European Patent Office

Office européen des brevets

(11) Veröffentlichungsnummer: **0 136 665**
**B1**

(12) # EUROPÄISCHE PATENTSCHRIFT

(45) Veröffentlichungstag der Patentschrift:
01.06.88

(51) Int. Cl.⁴: **G 21 C 3/62**

(21) Anmeldenummer: 84111571.0

(22) Anmeldetag: 27.09.84

(54) Verfahren zum Herstellen von oxidischen Kernbrennstoffsinterkörpern.

(30) Priorität: 06.10.83 DE 3336387
11.07.84 DE 3425581

(43) Veröffentlichungstag der Anmeldung:
10.04.85 Patentblatt 85/15

(45) Bekanntmachung des Hinweises auf die Patenterteilung:
01.06.88 Patentblatt 88/22

(84) Benannte Vertragsstaaten:
DE SE

(56) Entgegenhaltungen:
DE - A - 2 008 855
DE - C - 3 144 684
FR - A - 2 070 027
FR - A - 2 104 136
FR - A - 2 516 690

Die Akte enthält technische Angaben, die nach dem Eingang der Anmeldung eingereicht wurden und die nicht in dieser Patentschrift enthalten sind.
(73) Patentinhaber: Siemens Aktiengesellschaft Berlin und München, Wittelsbacherplatz 2, D-8000 München 2 (DE)
Patentinhaber: REAKTOR-BRENNELEMENT UNION GmbH, Rodenbacher Chaussee 6, D-6450 Hanau 11 (DE)

(72) Erfinder: Schäfer, Reinhard, Landwehrstrasse 11, D-6458 Rodenbach (DE)
Erfinder: Mathieu, Viktor, Werner von Siemens Strasse 14, D-6454 Bruchköbel (DE)
Erfinder: Gradel, Gerhard, Dipl.-Ing., Lilienstrasse 23, D-8581 Eckersdorf (DE)
Erfinder: Dörr, Wolfgang, Dr. Dipl.-Phys., von-Weber-Strasse 51a, D-8522 Herzogenaurach (DE)
Erfinder: Peehs, Martin, Dr. Dipl.-Phys., Falkenstrasse 3, D-8526 Bubenreuth (DE)
Erfinder: Assmann, Helmut, Dr. Dipl.-Phys., Schwabach-Strasse 13, D-8524 Dormitz (DE)

(74) Vertreter: Mehl, Ernst, Dipl.-Ing. et al, Postfach 22 01 76, D-8000 München 22 (DE)

## Beschreibung

Die Erfindung betrifft ein Verfahren zum Herstellen von oxidischen Kernbrennstoffsinterkörpern durch Kompaktieren von Ausgangspulver aus $UO_2$ oder einer Mischung aus $UO_2$ und $PuO_2$, das Seltenerdoxid, insbesondere $Gd_2O_3$, als Zusatz enthält, zu Preßlingen und anschließendes Verdichten dieser Preßlinge durch Sintern in einer reduzierend wirkenden Gasatmosphäre bei einer Temperatur im Bereich von 1500°C bis 1750°C.

Ein derartiges Verfahren ist aus der deutschen Patentschrift 31 44 684 bekannt. Bei diesem bekannten Verfahren, bei dem der Zusatz an Seltenerdoxid bis zu 10 Gew.-% beträgt, wird $UO_2$-Ausgangspulver zum Kompaktieren verwendet, welches eine spezifische Oberfläche im Bereich von 2 bis 4,5 m²/g und/oder einen mittleren Kristallitdurchmesser im Bereich von 80 nm bis 250 nm hat. Der Haltezeitraum für die Temperatur beim Sintern der Preßlinge kann 1 bis 10 Stunden betragen. Dieses bekannte Verfahren führt zu oxidischen Kernbrennstoffsinterkörpern, die ein Seltenerdelement als neutronenphysikalisch abbrennbares Neutronengift enthalten und deren Dichte mehr als 93% und sogar mehr als 95% der theoretisch möglichen Dichte ist. Solche hochdichten Kernbrennstoffsinterkörper setzen in einem im Betrieb befindlichen Kernreaktor verhältnismäßig wenig gasförmige oder leicht flüchtige Kernspaltprodukte frei. Deshalb entwickeln mit solchen Kernbrennstoffsinterkörpern gefüllte Brennstäbe kaum Überdruck in den Brennstabhüllrohren. Ferner tritt während des Betriebes im Kernreaktor kein Schrumpfen und kein örtliches Überhitzen dieser Kernbrennstoffsinterkörper auf, was zu Brennstabdefekten führen könnte.

Das $UO_2$-Ausgangspulver für das bekannte Verfahren mit der verhältnismäßig kleinen spezifischen Oberfläche und dem verhältnismäßig großen Kristallitdurchmesser kann ungranuliert sein und nach dem sogennannten ADU-Verfahren entsprechend «Gmelin-Handbuch der anorganischen Chemie, Uran, Ergänzungsband A3, pp. 99 bis 108, 1981» unmittelbar gewonnen sein. Es kann aber auch ungranuliert sein und nach dem sogenannten AUC-Verfahren entsprechend «Gmelin-Handbuch der anorganischen Chemie, Uran, Ergänzungsband A3, pp. 101 bis 104, 1981» hergestellt sein, sofern bei diesem letztgenannten Verfahren die Verweilzeiten des Pulvers unter Pyrohydrolysebedingungen genügend lang gewählt wurden.

Ungranuliertes, nach dem ADU-Verfahren gewonnenes Urandioxidpulver ist im allgemeinen nicht rieselfähig und kann daher nur schlecht gehandhabt werden. Andererseits bedeuten verlängerte Verweilzeiten des Pulvers unter Pyrohydrolysebedingungen beim AUC-Verfahren einen verminderten Durchsatz durch eine Anlage zur Pulverherstellung.

Der Erfindung liegt daher die Aufgabe zugrunde, das bekannte Verfahren weiterzubilden und die Herstellung hochdichter oxidischer Kernbrennstoffsinterkörper insbesondere mit verhältnismäßig hohem Gehalt an neutronenphysikalisch abbrennbarem Neutronengift zu ermöglichen, ohne daß nach dem ADU-Verfahren hergestelltes Urandioxidpulver verwendet werden muß und ohne daß verlängerte Verweilzeiten des Pulvers unter Pyrohydrolysebedingungen beim Herstellen nach dem AUC-Verfahren erforderlich sind.

Zur Lösung dieser Aufgabe ist ein Verfahren der eingangs erwähnten Art erfindungsgemäß dadurch gekennzeichnet, daß Ausgangspulver zum Kompaktieren verwendet wird, dessen $UO_2$-Anteil eine spezifische Oberfläche im Bereich von 4 bis 7 m²/g und/oder einen mittleren Kristallitdurchmesser kleiner als 0,5 µm, vorzugsweise im Bereich von 0,2 µm bis 0,01 µm, hat und welchem 5 bis 500 Gew. ppm Aluminium oder 5 bis 50 Gew. ppm Titan in Form von Oxid- oder Hydroxid in einem Mischschritt zugesetzt wird, welcher die ursprüngliche Partikelgröße der Pulver unverändert läßt, und daß der Haltezeitraum für die Temperatur beim Sintern im Bereich von 1 bis 4 Stunden gewählt wird.

Es wurde gefunden, daß dieser geringe Gehalt an Aluminium oder Titan im Ausgangspulver die Diffusionsvorgänge beim Sintern so beschleunigt, daß zum Herstellen der oxidischen Kernbrennstoffsinterkörper trotz der Beimengung verhältnismäßig großer Mengen von an sich sinterhemmend wirkendem Seltenerdoxid wie z.B. $Gd_2O_3$-Pulver nach dem AUC-Verfahren mit normalen, nicht verlängerten Pyrohydrolysezeiten hergestelltes $UO_2$-Pulver verwendet und trotzdem eine hohe Sinterdichte der Kernbrennstoffsinterkörper gegebenenfalls sogar von mehr als 95% der theoretischen möglichen Dichte erzielt werden kann. In den 1 bis 4 Stunden Haltezeitraum für die Temperatur beim Sintern, was einen beschleunigten Fertigungsdurchlauf bedeuten kann, wird eine optimale Sinterdichte der Kernbrennstoffsinterkörper erzielt. Eine längere Wärmebehandlung verbessert diese Sinterdichte nicht mehr, sondern kann unter Umständen sogar zu einem unerwünschten Anschwellen der Kernbrennstoffsinterkörper führen.

Auch kann eine Wärmebehandlung in oxidierend wirkender Gasatmosphäre vor oder nach dem Sintern mittels der Wärmebehandlung in der reduzierend wirkenden Gasatmosphäre ohne Beeinträchtigung der Sinterdichte der aus diesem $UO_2$-Ausgangspulver mit der Seltenerdoxidbeimengung gewonnenen Kernbrennstoffsinterkörper entfallen. Da im Ausgangspulver Aluminium oder Titan in Form von Oxid- oder Hydroxidpulver in einem Mischschritt zugesetzt wird, welcher die ursprüngliche Partikelgröße der Pulver unverändert läßt, kann ein Granulierschritt eingespart werden, der beispielsweise beim Mischen der Pulver durch gemeinsames Mahlen unvermeidbar ist. Ferner hat Aluminium oder Titan im Kernbrennstoffsinterkörper um so weniger Einfluß auf dessen Plastizität (Kriechverhalten) und Wärmeleitfähigkeit, je geringer der Gehalt an diesen Stoffen ist. Praktisch kein Einfluß ist festzustellen, wenn der Gehalt an Aluminium im Bereich von 5 bis 200 Gew. ppm bzw. der an Titan im Bereich von 5 bis 50 Gew. ppm liegen.

Außerdem ist es für eine optimale Wirksamkeit des Aluminiums oder Titans im Ausgangspulver günstig, wenn dessen Gehalt an anderen Fremdstoffen außer Aluminium und Titan im Kristallgitter des $UO_2$-Anteiles kleiner als 200 Gew. ppm ist. Ein solches Urandioxidpulver wird durch das AUC-Verfahren erzielt.

Günstigerweise kann Ausgangspulver verwendet werden, das bis zu 10 Gew.-% Seltenerdoxid, insbesondere $Gd_2O_3$, als Zusatz enthält. Vorteilhafterweise wird Ausgangspulver verwendet, das 2 bis 10, vorzugsweise 4 bis 10 Gew.-% Seltenerdoxid, insbesondere $Gd_2O_3$, als Zusatz enthält, während für optimal ausgelegte Kernbrennstoffsinterkörper günstigerweise Ausgangspulver verwendet werden kann, das mehr als 10 bis 20 Gew.-% Seltenerdoxid, insbesondere $Gd_2O_3$, als Zusatz enthält.

Aus den veröffentlichten Unterlagen der europäischen Patentanmeldung EP-A-00 76 680 ist es zwar bekannt, $UO_2$-Pulver vor dem Kompaktieren und Sintern neben anderen Stoffen auch Aluminium und Titan in Form von Nitraten oder Oxiden zuzumischen. Diesem $UO_2$-Pulver wird jedoch kein Seltenerdoxid zugesetzt. Dementsprechend werden durch die Aluminium- oder Titanzumischungen auch nicht die sinterhemmenden Eigenschaften von Seltenerdoxiden zum Erhöhen der Sinterdichte überwunden, sondern es sollen Sinterkörper mit reduzierter Dichte erzielt werden, die sich bei späterem Aufheizen in einem Kernreaktor nicht nachverdichten und deshalb große Korngröße und relativ große Poren haben sollen. Um dies zu erreichen, müssen dem $UO_2$-Pulver 0,05 bis 1,7 Vol.-% – also eine erheblich größere Menge als beim Überwinden der sinterhemmenden Eigenschaften von Seltenerdoxiden – an Zusatzstoffen wie Aluminium und Titan zugesetzt werden.

Ferner ist aus der deutschen Offenlegungsschrift 20 08 855 bekannt, $UO_2$-Pulver vor dem Kompaktieren und Sintern Seltenerdoxid und eine Titan- oder Aluminiumverbindung zuzusetzen. Der Gehalt an Seltenerdoxid beträgt in dem $UO_2$-Pulver aber beispielsweise nur 0,6%, ist also sehr gering, während der Gehalt an Aluminium mit beispielsweise 0,1% Aluminiumoxid bzw. etwa 530 Gew. ppm Aluminium oder an Titan mit beispielsweise 0,01 Gew.-% Titandioxid bzw. etwa 60 Gew. ppm Titan verhältnismäßig hoch ist. Durch den verhältnismäßig hohen Aluminium- bzw. Titanzusatz zum $UO_2$-Pulver soll eine gleichmäßige Verteilung der seltenen Erde im Sinterkörper erzielt werden, der durch das Sintern des kompaktierten $UO_2$-Pulvers gewonnen wird. Der Gehalt an Seltenerdoxid im $UO_2$-Pulver ist jedoch so gering, daß er praktisch keine verringerte Dichte des gewonnenen Kernbrennstoffsinterkörpers zur Folge haben kann. Der hohe Aluminium- und Titangehalt im $UO_2$-Pulver führt dagegen zu nachteiligen Einflüssen auf die Plastizität (Kriechverhalten) und Wärmeleitfähigkeit der aus dem kompaktierten $UO_2$-Pulver gewonnenen Kernbrennstoffsinterkörper.

Die Erfindung und ihre Vorteile seien anhand von Vergleichs- und Ausführungsbeispielen durch die nachfolgenden Tabellen 1 und 2 näher erläutert:

Nach dem AUC-Verfahren entsprechend dem Gmelin-Handbuch gewonnenes ungranuliertes $UO_2$-Ausgangspulver mit einer Partikelgröße im Bereich von 2 µm bis 15 µm, mit einer spezifischen Oberfläche von 4,5 m²/g und einem mittleren Kristallitdurchmesser von 0,08 µm sowie mit einem Gehalt an Cl, F, N, C, Ni, Ca, Fe und Si im $UO_2$-Kristallgitter von insgesamt 85 Gew. ppm wurde mit $Gd_2O_3$-Pulver mit einer Partikelgröße im Bereich von 0,5 µm bis 5 µm und gegebenenfalls $TiO_2$- bzw. Al $(OH)_3$-Pulver mit einer Partikelgröße im Bereich von 2 µm bis 15 µm in einem Mischer vermischt, welcher die ursprüngliche Partikelgröße der Pulver unverändert läßt. Anschließend wurde das Gemisch zu Preßlingen mit einer Preßlingsdichte von 5,6 g/cm³ kompaktiert. In einem Sinterofen wurden diese Preßlinge sodann ausschließlich in einer reduzierend wirkenden reinen Wasserstoffatmosphäre mit einer Aufheizgeschwindigkeit von 10°C/Minute auf 1750°C erhitzt und auf dieser Temperatur zwei Stunden lang gehalten. Nach dem Abkühlen hatten die aus den Preßlingen gewonnenen Kernbrennstoffsinterkörper die in der Tabelle 1 in Abhängigkeit von der Menge des dem Ausgangspulver zugesetzten $Gd_2O_3$- und $TiO_2$- bzw. Al $(OH)_3$-Pulvers in Prozent der theoretischen Dichte angegebenen Sinterdichten.

Tabelle 1

| Art des Zusatzes zum Ausgangspulver ($UO_2 + Gd_2O_3$) | Menge des Zusatzes im Ausgangspulver in Gew. ppm | Sinterdichte bei 3 Gew.-% $Gd_2O_3$ im Ausgangspulver in % der theor. Dichte | Sinterdichte bei 7 Gew.-% $Gd_2O_3$ im Ausgangspulver in % der theor. Dichte |
|---|---|---|---|
| $TiO_2$ | 0 | 93,7 | 93,4 |
| $TiO_2$ | 50 | 94,5 | 94,7 |
| Al $(OH)_3$ | 210 | – | 95,4 |

Ferner wurden nach dem AUC-Verfahren entsprechend dem Gmelin-Handbuch gewonnenes ungranuliertes $UO_2$-Ausgangspulver mit einer Partikelgröße im Bereich von 2 µm bis 15 µm, mit einer spezifischen Oberfläche von 6,0 m²/g und einem mittleren Kristallitdurchmesser von 0,08 µm sowie mit einem Gehalt an Cl, F, N, C, Ni, Ca, Fe und Si im $UO_2$-Kristallgitter von insgesamt 85 Gew.-% ppm in dem gleichen Mischer mit den in der nachfolgenden Tabelle 2 angegebenen Mengen $Gd_2O_3$-Pulver mit einer Partikelgröße im Bereich von 0,5 µm bis 5 µm und gegebenenfalls $TiO_2$- bzw. Al $(OH)_3$-Pulver mit einer Partikelgröße im Bereich von 2 µm bis 15 µm vermischt und dann in gleicher Weise wie zur Ermittlung der Werte nach Tabelle 1 kompaktiert und gesintert. Es ergaben sich die in der Tabelle 2 in Abhängigkeit von der dem Ausgangspulver zugesetzten $Gd_2O_3$- und $TiO_2$- bzw. Al $(OH)_3$-Pulvermengen angegebenen Sinterdichten in Prozenten der theoretischen Dichte.

Tabelle 2

| Art des Zusatzes zum Ausgangspulver ($UO_2 + Gd_2O_3$) | Menge des Zusatzes im Ausgangspulver in Gew. ppm | Sinterdichte bei 3 Gew.-% $Gd_2O_3$ im Ausgangspulver in % der theor. Dichte | Sinterdichte bei 7 Gew.-% $Gd_2O_3$ im Ausgangspulver in % der theor. Dichte |
|---|---|---|---|
| $TiO_2$ | 0 | 93,4 | 93,1 |
| $TiO_2$ | 50 | 95,7 | 95,5 |
| Al $(OH)_3$ | 0 | 93,4 | 93,1 |
| Al $(OH)_3$ | 40 | 94,3 | 95,4 |
| Al $(OH)_3$ | 60 | 94,7 | 96,3 |
| Al $(OH)_3$ | 80 | 95,7 | – |

## Patentansprüche

1. Verfahren zum Herstellen von oxidischen Kernbrennstoffsinterkörpern durch Kompaktieren von Ausgangspulver aus $UO_2$ oder einer Mischung aus $UO_2$ und $PuO_2$, das Seltenerdoxid, insbesondere $Gd_2O_3$, als Zusatz enthält, zu Preßlingen und anschließendes Verdichten dieser Preßlinge durch Sintern in einer reduzierend wirkenden Gasatmosphäre bei einer Temperatur im Bereich von 1500°C bis 1750°C, dadurch gekennzeichnet, daß Ausgangspulver zum Kompaktieren verwendet wird, dessen $UO_2$-Anteil eine spezifische Oberfläche im Bereich von 4 bis 7 $m^2/g$ und/oder einen mittleren Kristallitdurchmesser kleiner als 0,5 $\mu m$, vorzugsweise im Bereich von 0,2 bis 0,01 $\mu m$, hat, und welchem 5 bis 500 Gew. ppm Aluminium oder 6 bis 50 Gew. ppm Titan in Form von Oxid- oder Hydroxid in einem Mischschritt zugesetzt wird, welcher die ursprüngliche Partikelgröße der Pulver unverändert läßt, und daß der Haltezeitraum für die Temperatur beim Sintern im Bereich von 1 bis 4 Stunden gewählt wird.

2. Verfahren nach Anspruch 1, dadurch gekennzeichnet, daß Ausgangspulver zum Kompaktieren verwendet wird, das 5 bis 200 Gew. ppm Aluminium enthält.

3. Verfahren nach Anspruch 1, dadurch gekennzeichnet, daß Ausgangspulver verwendet wird, dessen Gehalt an anderen Fremdstoffen außer Aluminium und Titan im Kristallgitter des $UO_2$-Anteiles kleiner als 200 Gew. ppm ist.

4. Verfahren nach Anspruch 1, dadurch gekennzeichnet, daß Ausgangspulver verwendet wird, das bis zu 10 Gew.-% Seltenerdoxid, insbesondere $Gd_2O_3$, als Zusatz enthält.

5. Verfahren nach Anspruch 4, dadurch gekennzeichnet, daß Ausgangspulver verwendet wird, das 2 bis 10, vorzugsweise 4 bis 10 Gew.-% Seltenerdoxid, insbesodere $Gd_2O_3$, als Zusatz enthält.

6. Verfahren nach Anspruch 1, dadurch gekennzeichnet, daß Ausgangspulver verwendet wird, das mehr als 10 bis zu 20 Gew.-% Seltenerdoxid, insbesondere $Gd_2O_3$, als Zusatz enthält.

## Claims

1. Method of manufacturing oxidic nuclear fuel sinter bodies by compacting base powder of $UO_2$ or of a mixture of $UO_2$ and $PuO_2$, which contains as additive rare earth oxide, in particular $Gd_2O_3$, to molded pieces and subsequent compressing of these molded pieces by sintering in a reducing-effective gas atmosphere at a temperature in the region of 1500°C to 1750°C, characterised in that base powder is used for compacting, the $UO_2$-portion of which has a specific surface in the region of 4 to 7 $m^2/g$ and/or a medium crystallite diameter which is smaller than 0.5 $\mu m$, preferably in the region of 0.2 $\mu m$ to 0.01 $\mu m$, and to which is added in a mixing step 5 to 500 ppm by weight of aluminium or 5 to 50 ppm by weight of titanium in the form of oxide or hydroxide, which step leaves the original particle size of the powder unchanged and that the pausing time for the temperature when sintering is selected in the region of 1 to 4 hours.

2. Method according to claim 1, characterised in that base powder is used for compacting which contains 5 to 200 ppm by weight of aluminium.

3. Method according to claim 1, characterised in that base powder is used of which the contents of other foreign material, except aluminium and titanium, in the crystal lattic of the $UO_2$ portion is smaller than 200 ppm by weight.

4. Method according to claim 1, characterised in that base powder is used which contains as additive up to 10% by weight of rare earth oxide, in particular $Gd_2O_3$.

5. Method according to claim 4, characterised in that base powder is used which contains as additive 2 to 10, preferably 4 to 10% by weight of rare earth oxide, in particular $Gd_2O_3$.

6. Method according to claim 1, characterised in that base powder is used which contains as additive more than 10 to 20% by weight of rare earth oxide, in particular $Gd_2O_3$.

## Revendications

1. Procédé de fabrication de corps frittés oxydés en matière combustible nucléaire, en compactant de la poudre de départ, constituée de $UO_2$ ou d'un mélange de $UO_2$ et de $PuO_2$ et contenant, comme additif, de l'oxyde de terre rare, notamment $Gd_2O_3$, en ébauches et en comprimant ensuite ces ébauches par frittage dans une atmosphère gazeuse réductrice à une température comprise entre 1500°C et 1750°C, caractérisé en ce qu'il consiste à utiliser de la poudre de départ pour le compactage, dont la proportion de $UO_2$ a une surface spécifique de l'ordre de 4 à 7 $m^2/g$ et/ou un diamètre moyen de cristallite inférieur à 0,5 $\mu m$, et de préférence compris entre 0,2 $\mu m$ et 0,01 $\mu m$ et qui est additionnée de 5 à 500 parties en poids d'aluminium par million de parties ou de 5 à 50 parties en poids de titane par million de parties sous forme d'oxyde ou d'hydroxyde dans un stade de mélange qui laisse inchangée la dimension d'origine des particules de la poudre, et à choisir la durée de maintien à la température lors du frittage entre 1 et 4 heures.

2. Procédé suivant la revendication 1, caractérisé en ce qu'il consiste à utiliser de la poudre de départ pour le compactage qui contient de 2 à 200 parties en poids d'aluminium par million de parties.

3. Procédé suivant la revendication 1, caractérisé en ce qu'il consiste à utiliser de la poudre de départ dont la teneur en autres substances étrangères, à l'exception de l'aluminium et du titane, dans le réseau cristallin de la proportion de $UO_2$ est inférieure à 200 parties en poids par million.

4. Procédé suivant la revendication 1, caractérisé en ce qu'il consiste à utiliser de la poudre de départ, qui contient jusqu'à 10% en poids d'oxyde de terre rare, notamment de $Gd_2O_3$, comme additif.

5. Procédé suivant la revendication 4, caractérisé en ce qu'il consiste à utiliser de la poudre de départ, qui contient de 2 à 10 et de préférence de 4 à 10% en poids d'oxyde de terre rare, notamment de $Gd_2O_3$, comme additif.

6. Procédé suivant la revendication 1, caractérisé en ce qu'il consiste à utiliser de la poudre de départ, qui contient plus de 10 à 20% en poids d'oxyde de terre rare, notamment de $Gd_2O_3$, comme additif.